Europäisches Patentamt

European Patent Office

Office européen des brevets

(11) Veröffentlichungsnummer: **0 349 958**

**A2**

(12) **EUROPÄISCHE PATENTANMELDUNG**

(21) Anmeldenummer: 89112124.6

(22) Anmeldetag: 03.07.89

(51) Int. Cl.⁴: **A01C 15/04 , A01C 7/06**

(30) Priorität: 04.07.88 DE 8808547 U

(43) Veröffentlichungstag der Anmeldung:
**10.01.90 Patentblatt 90/02**

(84) Benannte Vertragsstaaten:
**DE ES FR GB IT NL**

(71) Anmelder: **Karl Becker GMBH & CO K.G.
Maschinenfabrik
Postfach 44
D-3525 Oberweser 1-Gieselwerder(DE)**

(72) Erfinder: **Deutschle, Karl
Oberberghofstrasse 18
D-7906 Blaustein(DE)**
Erfinder: **von Allwörden, Wilhelm
Alpenstrasse 18
D-7704 Gailingen(DE)**

(74) Vertreter: **Winter, Konrad Theodor, Dipl.-Ing.
et al
Patentanwaltsbüro Tiedtke- Bühling- Kinne-
Grupe- Pellmann- Grams- Struif- Winter-
Roth Bavariaring 4
D-8000 München 2(DE)**

(54) **Mehrreihig arbeitendes landwirtschaftliches Bodenbearbeitungsgerät.**

(57) Beschrieben wird ein mehrreihig arbeitendes landwirtschaftliches Bodenbearbeitungsgerät, insbesondere in der Ausgestaltung als Einzelkorn-Sämaschine oder Bodenhacke. Das Gerät hat mehrere Arbeitsaggregate und einen sich quer zur Arbeitsrichtung erstreckenden Düngervorratsbehälter, von dem über Dosiervorrichtungen den Arbeitsaggregaten zugeordnete Düngerschare mit Düngemittel versorgt werden. Zumindest die äußeren Arbeitsaggregate und Düngerschare sind vorzugsweise gemeinsam bewegbar an zumindest einem Ausleger angebracht, mit dem sie in eine Betriebsposition einerseits und in eine Transportposition andererseits gebracht werden können, in der sie innerhalb der für den Fahrzeugtransport zulässigen Fahrzeugabmessungen zu liegen kommen. Die ortsfesten, inneren Düngerschare sind mit einer Schwerkraftfördereinrichtung und die bewegbaren, äußeren Düngerschare mit einer pneumatischen Fördereinrichtung verbunden. Hierdurch ergibt sich eine zuverlässig arbeitende Versorgung sämtlicher Düngerschare, die auch einem rauhen Betrieb Stand hält.

Fig. 2

## Mehrreihig arbeitendes landwirtschaftliches Bodenbearbeitungsgerät

Die Erfindung betrifft ein mehrreihig arbeitendes Bodenbearbeitungsgerät, insbesondere eine Einzelkorn-Sämaschine oder eine Bodenhacke, gemäß dem Oberbegriff des Patentanspruchs 1.

Ein derartiges landwirtschaftliches Zusatzgerät, das zumeist von einem landwirtschaftlichen Schlepper angetrieben ist, ist beispielsweise als 4-, 6- oder 8-reihige Sämaschine oder Bodenhacke bekannt. Dabei sind im Falle einer Einzelkorn-Sämaschine jeweils 4, 6 bzw. 8 Arbeitsaggregate in Form von Ablagevorrichtungen für Saatgut quer zur Fahrzeuglängsachse nebeneinander angeordnet, wobei diesen Arbeitsaggregaten jeweils eine Düngerschar zugeordnet ist. Die 6- und die 8-reihige Sämaschine oder Bodenhacke ist für den Transport auf öffentlichen Straßen zu breit, so daß das Bodenbearbeitungsgerät ein 4-reihiges Grundelement umfaßt und beispielsweise einen Klappmechanismus aufweist, mit dem bei der 6-reihigen Sämaschine jeweils die äußere und bei der 8-reihigen Sämaschine jeweils die beiden äußeren Ablagevorrichtungen und Düngerschare senkrecht über Bodenniveau hochgeklappt werden können.

Mit Rücksicht auf die Verschwenkbarkeit bzw. die Lageveränderung der Arbeitsaggregate bereitet die Versorgung der Düngerschare Probleme. Während bei der Sämaschine die Abgabevorrichtungen für das Saatgut ständig über flexible Leitungen mit dem Gebläse verbunden sind, erfolgt die Versorgung der inneren Düngerschare über Schwerkraft, indem die Position des Düngervorratsbehälters ausgenützt wird. Für die äußeren Düngerschare ist allerdings eine mechanische Einrichtung erforderlich, die für den Transport des Gerätes auf der Straße getrennt wird und bei Inbetriebnahme insbesondere unter rauhen Betriebsbedingungen keinen einwandfreien Anschluß gewährleistet.

Der Erfindung liegt deshalb die Aufgabe zugrunde, ein mehrreihig arbeitendes landwirtschaftliches Bodenbearbeitungsgerät gemäß dem Oberbegriff des Patentanspruchs 1 so weiterzubilden, daß stets eine einwandfreie Versorgung der äußeren bewegbaren, beispielsweise verschwenkbaren, Düngerschare gewährleistet ist.

Diese Aufgabe wird durch die im kennzeichnenden Teil des Patentanspruchs 1 angegebenen Merkmalen gelöst. Durch die ständige Verbindung der Düngerschare mit den Dosiervorrichtungen ergibt sich ein geschlossenes System mit der Garantie ständiger Einsatzbereitschaft, wobei in sinnvoller Weise das bei vielen derartigen Geräten, wie z.B. bei einer Sämaschine, vorhandene Gebläse genutzt werden kann.

Weiterbildungen der Erfindung ergeben sich aus den weiteren Patentansprüchen. Insbesondere die Maßnahme nach Patentanspruch 3 oder 4 bringt den Vorteil einer sehr einfachen Steuerung der Dosierung, indem eine oder beide Dosiervorrichtungen durch bloßes Umschalten zum Einsatz kommen können.

Weitere Ziele, Anwendungen und Vorteile der Erfindung werden aus der folgenden ausführlichen Beschreibung zweier bevorzugter Ausführungsbeispiele unter Bezugnahme auf die beigefügten Zeichnungen vollständig ersichtlich.

Fig 1 zeigt ein Bodenbearbeitungsgerät in der Ausgestaltung als Sämaschine in Seitenansicht;

Fig. 2 zeigt die Sämaschine in Vorderansicht in Richtung des Pfeils A in Fig. 1;

Fig. 3 und 4 zeigen jeweils eine Ansicht einer weiteren Ausführungsform des Bodenbearbeitungsgeräts in der Arbeits- bzw. der Transportstellung der Düngerschare und/oder der Arbeitsaggregate.

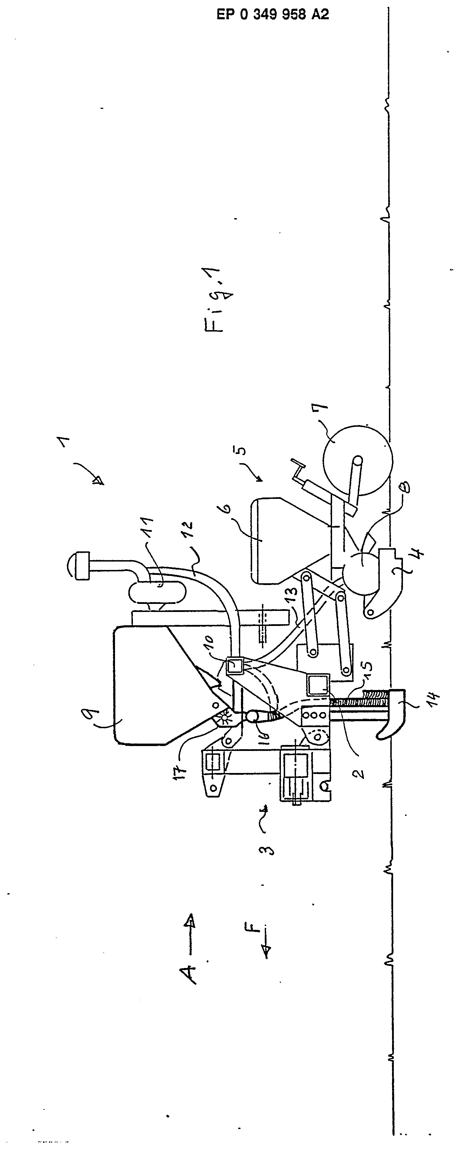

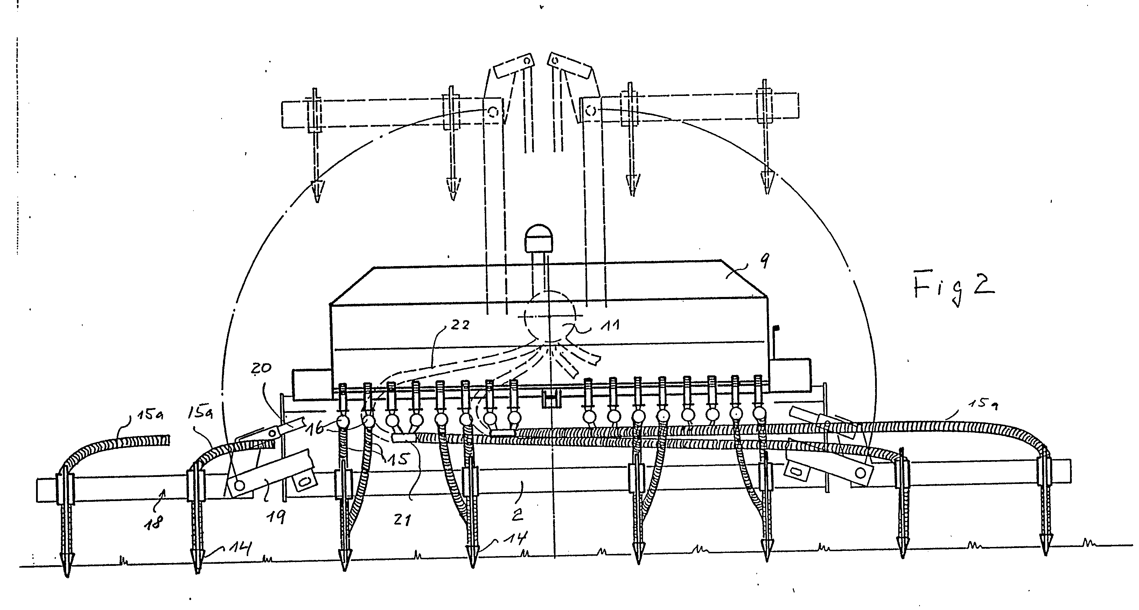

Eine pneumatische Einzelkorn-Sämaschine 1, wie sie in einer 8-reihigen Ausführung in den Fig. 1 und 2 dargestellt ist, weist eine Tragkonstruktion 2 auf und kann mittels einer Anschlußvorrichtung 3 mit einem nicht dargestellten Schleppfahrzeug über einen sogenannten Drei-Punkt-Bock verbunden bzw. an diesem angehängt werden. Die Sämaschine 1 wird von dem Schleppfahrzeug in Fahrtrichtung F gezogen, und stützt sich über nicht dargestellte Laufräder am Erdboden ab. An der Tragkonstruktion 2 der Sämschine 1 ist ein Düngervorratsbehälter befestigt, der quer zur Fahrtrichtung F verläuft. Der Düngervorratsbehälter 9 ist als Zentralbehälter ausgebildet, der sich über eine Breite erstreckt, die mindestens der Breite des nicht dargestellten Schleppfahrzeugs entspricht. Hinter dem Düngervorratsbehälter 9 ist ein Gebläse 11 angeordnet, das der Erzeugung von Druckluft dient und üblicherweise relativ laut ist.

Durch die Anordnung des Düngervorratsbehälters 9 zwischen dem Fahrer des nicht dargestellten Schleppfahrzeugs und dem Gebläse 11 bildet der Düngervorratsbehälter 9 eine wirksame Schutzwand für den Fahrer, so daß dieser durch den Lärm des Gebläses 11 nicht übermäßig beeinträchtigt wird.

Am in Fahrtrichtung gesehen hinteren Ende der Sämaschine ist eine Vielzahl von Ablagevorrichtungen 5 für Saatgut angeordnet. Die Ablagevorrichtungen 5 verlaufen in einer Linie nebeneinander quer zur Fahrzeuglängsachse, wobei für jede Reihe eine Ablagevorrichtung 5 vorgesehen ist. Bei der dargestellten 8-reihigen Ausführung der Sämaschine sind dementsprechend acht Ablagevorrichtungen 5 nebeneinander angeordnet. Jede Ablagevorrichtung 5 weist einen Saatgutbehälter 6, eine Vereinzelungseinrichtung 8 mit anschließender Säschar 4, mit dem das Saatgut in eine Bodenfurche gelegt wird, und eine Andruckrolle 7 auf. Die Vereinzelung des Saatguts in den Vereinzelungseinrichtungen erfolgt mit Hilfe von Druckluft, die über Schlauchleitungen 13 von einem Verteiler 10 abgezweigt wird, der über die Leitung 12 vom Gebläse 11 gespeist wird.

Jeder Säschar 4 ist in Fahrtrichtung F eine Düngerschar 14 vorgeschaltet, die, wie insbesondere Fig. 2 zeigt, über eine Leitungsverbindung 15 jeweils mit zwei Dosiervorrichtungen 16 verbunden ist, die einzeln oder gemeinsam an die Säscher angeschlossen werden können und über eine Fördervorrichtung 17 mit dem Düngervorratsbehälter 9 verbunden sind.

Von den acht Ablagevorrichtungen 5 und Düngerscharen 14 sind die vier inneren, im Bereich des Düngervorratsbehälters 9 befindlichen Ablagevorrichtungen fest an der Tragkonstruktion 2 der Sämaschine 1 angebracht, während die vier äußeren Ablagevorrichtungen und Düngerschare paarweise über einen schwenkbaren Ausleger 18 an die Tragkonstruktion 2 angeschlossen sind. Der Ausleger 18 ist als Gelenkviereck aufgebaut und weist ein Tragelement 19 sowie eine im wesentlichen parallel zum Tragelement 19 verlaufende Zugstange 20 auf. Das Tragelement 19 sowie die Zugstange 20 sind an ihrem einen Ende jeweils an der Tragkonstruktion 2 und an ihrem anderen Ende mit dem Ausleger 18 verbunden. Der Ausleger 18 kann somit eine kreisförmige Schwenkbewegung um seine Befestigungspunkte an der Tragkonstruktion 2 der Sämaschine 1 ausführen, wobei die äußeren Ablagevorrichtungen und Düngerschare in eine Betriebsposition, in der sie neben den ortsfesten Ablagevorrichtungen 5 im wesentlichen auf Bodenniveau angeordnet sind, geschwenkt werden können, wie es in Fig. 2 in ausgezogenen bzw. gestrichelten Linien gezeigt ist. Durch die Ausbildung des Auslegers 18 als Gelenkviereck erfahren die äußeren Ablagevorrichtungen und die Düngerschare bei der Schwenkung gegenüber den inneren ortsfesten Ablagevorrichtungen eine reine Translationsbewegung, d.h. sie wird im Parallelogramm verschwenkt, und ist in der Ruheposition oberhalb des Düngervorratsbehälters 9 nahe der Fahrzeuglängsachse aufgenommen, wie es in Fig. 2 gestrichelt dargestellt ist.

Während des Betriebs der Sämaschine 1 muß ständig Düngemittel aus dem Düngervorratsbehälter 9 zu den einzelnen Düngerscharen 14 gefordert werden. Dazu sind die inneren, ortsfesten Düngerschare jeweils über zwei fest installierte Schlauchleitungen 15 mit zwei Dosiervorrichtungen 16 verbunden und das Düngemittel wird infolge seines Eigengewichtes den vier inneren Düngerscharen zugeführt. Die äußeren Düngerschare sind jeweils über eine flexible Leitung 15a an einem Injektor 21 angeschlossen, der mit zwei Dosiervorrichtungen 16 verbunden ist und über eine Schlauchleitung 22 vom Gebläse 11 beaufschlagt wird, so daß die Förderung zu diesen Düngerscharen pneumatisch erfolgt. Um eine ungestörte Verschwenkung der Ausleger zu gewährleisten sind die äußeren Düngerschare einer Seite jeweils mit denjenigen Dosiervorrichtungen 16 verbunden, die sich auf der anderen Seite, vorzugsweise an dem jeweiligen abgewandten Ende der Düngervorratsbehälter 9 befinden; dies ist in Fig. 2 für die beiden rechts außen befindlichen Düngerschare verdeutlicht. Die äußeren Ablagevorrichtungen sind in der Mitte des Verteilers 10 mit ihren Schlauchleitungen 13 angeschlossen, um eine genügende Schlauchlänge für das Verschwenken in die hochgeschwenkte Transportposition zu haben.

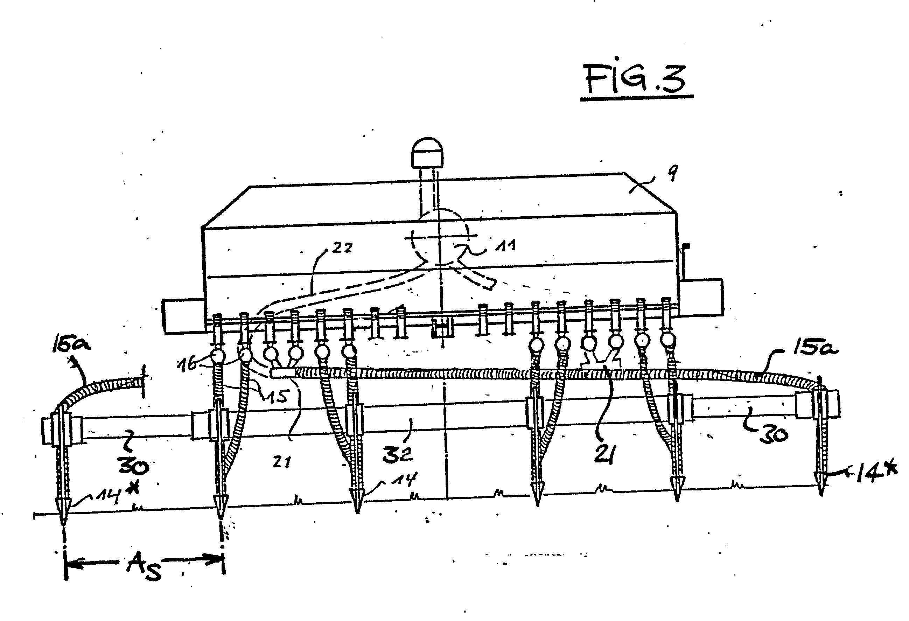

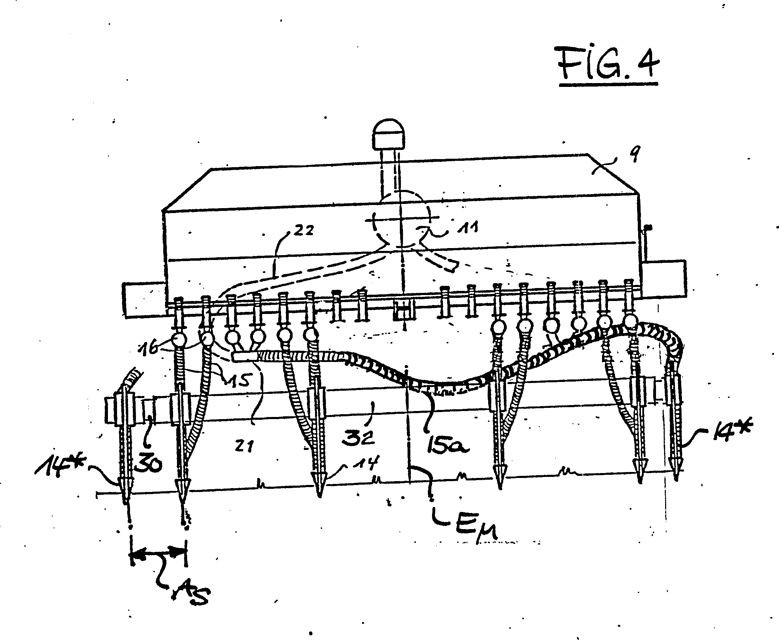

In den Fig. 3 und 4 ist eine weitere Ausführungsform des mehrreihig arbeitenden landwirtschaftlichen Bodenbearbeitungsgeräts gezeigt, das sich vom vorstehend beschriebenen Ausführungsbeispiel durch eine andere Halterung der jeweils äußeren Düngerschare 14 am Trägerrahmen 2 unterscheidet. Aus diesem Grunde sind auch diejenigen Komponenten der Maschine, die den entsprechenden Teilen der vorstehend beschriebenen Ausführungsform entsprechen, mit identischen Bezugszeichen bezeichnet. Fig. 3 zeigt das Bodenbearbeitungsgerät in der Arbeitsposition der nicht näher dargestellten Arbeitsaggregate und Düngerschare 14. Die jeweils äußeren Düngerschare 14* sitzen vorzugsweise zusammen mit den zugeordneten Arbeitsaggregaten auf einem Teleskoprohr 30, das axial verschiebbar in einem Trägerrohr 32 aufgenommen ist, das auch die übrigen Düngerschare 14 und die ggf. die zugeordneten - nicht näher dargestellten - Arbeitsaggregate trägt. Das jeweilige Teleskoprohr 30 ist lösbar mit dem Trägerrohr 32 verbunden, so daß eine Einstellung des Seitenabstandes $A_S$ erfolgen kann. Vorzugsweise sind auch die mittleren Düngerschare derart am Trägerrohr 32 befestigt, daß der Seitenabstand variabel gehalten ist.

In der Arbeitsposition der Düngerschare 14* ist das mehrreihig arbeitende landwirtschaftliche Bodenbearbeitungsgerät nicht auf der Straße verfahrbar, da die Gesamtbreite über das von der Straßenverkehrszulassungsordnung vorgeschriebene Maß hinausgeht. Die eigentliche Transportposition ist in Fig. 4 gezeigt, wobei in diesem Fall die Teleskoprohre 30 nach innen zur Verkleinerung des äußeren Abstands $A_S$ verschoben sind.

Wie auch im Falle der vorstehend beschriebenen Ausführungsform gemäß Fig. 1 und 2 sind die mittleren Düngerschare 14 jeweils über zwei fest installierte Schlauchleitungen 15 mit zwei Dosiervorrichtungen 16 verbunden, so daß das Düngemittel infolge seines Eigengewichtes diesen vier inneren Düngerscharen zugeführt werden kann. Die äußeren Düngerschare 14* sind jeweils über eine flexible Leitung 15a, von der nur die in Fahrtrichtung linke - in Fig. 3 und 4 rechte - Schlauchleitung vollständig gezeigt ist, an einen Injektor 21 angeschlossen, der mit zwei Dosiervorrichtungen 16 verbunden ist und - wie bei der Ausführungsform gemäß Fig. 1 und 2 - über eine Schlauchleitung 22 vom Gebläse 11 beaufschlagt wird. Die Förderung von Dünger zu diesen Düngerscharen erfolgt somit pneumatisch.

Man erkennt aus der Darstellung gemäß Fig. 4, daß durch den die Mittelebene $E_M$ übergreifenden Anschluß der Schlauchleitungen 15a an die jeweiligen Injektoren 21 eine leichte Verschiebbarkeit der äußeren Düngerschare 14* gegeben ist, ohne die flexible Schlauchleitung übermäßig zu beanspruchen.

Die Erfindung ist selbstverständlich nicht auf die konkret beschriebenen Ausführungsbeispiele der gezeigten Bodenbearbeitungsgeräte beschränkt. So ist es nicht unbedingt erforderlich, daß die Düngerschare 14* gemeinsam mit den zugeordneten Arbeitsaggregaten verschoben bzw. verschwenkt werden. Schließlich ist es auch möglich, die Bewegbarkeit der jeweils äußeren Düngerschare nach einem der anderen Bewegungsmuster ablaufen zu lassen. So ist es beispielsweise möglich, eine kombinierte Dreh- und translatorische Bewegung zur Anwendung zu bringen. Schließlich ist das erfindungsgemäße Konzept der Versorgung der Düngerschare eines mehrreihig arbeitenden landwirtschaftlichen Bodenbearbeitungsgeräts auch bei anderen Landmaschinen anwendbar, so z.B. bei einer Bodenhacke, bei der den eigentlichen Hackaggregaten jeweils zumindest ein Düngerschar zugeordnet ist.

Beschrieben wird ein mehrreihig arbeitendes landwirtschaftliches Bodenbearbeitungsgerät, insbesondere in der Ausgestaltung als Einzelkorn-Sämaschine oder Bodenhacke. Das Gerät hat mehrere Arbeitsaggregate und einen sich quer zur Arbeitsrichtung erstreckenden Düngervorratsbehälter, von dem über Dosiervorrichtungen den Arbeitsaggregaten zugeordnete Düngerschare mit Düngemittel versorgt werden. Zumindest die äußeren Arbeitsaggregate und Düngerschare sind vorzugsweise gemeinsam bewegbar an zumindest einem Ausleger angebracht, mit dem sie in eine Betriebsposition einerseits und in eine Transportposition andererseits gebracht werden können, in der sie innerhalb der für den Fahrzeugtransport zulässigen Fahrzeugabmessungen zu liegen kommen. Die ortsfesten, inneren Düngerschare sind mit einer Schwerkraftfördereinrichtung und die bewegbaren, äußeren Düngerschare mit einer pneumatischen Fördereinrichtung verbunden. Hierdurch ergibt sich eine zuverlässig arbeitende Versorgung sämtlicher Düngerschare, die auch einem rauhen Betrieb Stand hält.

**Ansprüche**

1. Mehrreihig arbeitendes landwirtschaftliches Bodenbearbeitungsgerät, insbesondere in der Ausgestaltung als pneumatische Einzelkorn-Sämaschine oder Bodenhacke, mit mehreren Arbeitsaggregaten und einem sich quer zur Arbeitsrichtung erstreckenden Düngervorratsbehälter, von dem über Dosiervorrichtungen den Arbeitsaggregaten zugeordnete Düngerschare mit Düngemittel vesorgt werden und hinter dem ein Gebläse für die Druckluftbeaufschlagung der Vereinzelungsvorrichtungen angeordnet ist, wobei zumindest die äußeren Arbeitsaggregate und Düngerschare vorzugsweise gemeinsam bewegbar an zumindest einem Ausleger angebracht sind, mit dem sie in eine Betriebsposition, in der sie in vorbestimmtem Seitenabstand neben den ortsfesten Arbeitsaggregaten im wesentlichen auf Bodenniveau angeordnet sind und in eine Transportposition gebracht werden können, in der sie innerhalb der für den Transport zulässigen Geräteabmessungen zu liegen kommen, **dadurch gekennzeichnet,** daß die ortsfesten, inneren Düngerschare (14) mit einer Schwerkraftfördereinrichtung (15, 16) und die bewegbaren, äußeren Düngerschare (14*) mit einer pneumatischen Fördereinrichtung (21, 22) verbunden sind.

2. Bodenbearbeitungsgerät nach Anspruch 1, dadurch gekennzeichnet, daß die bewegbaren Düngerschare (14; 14*) einer Seite des Geräts über flexible Leitungen (15a) jeweils mit Dosiervorrichtungen (16) verbunden sind, die sich auf der jeweils anderen Seite des Düngervorratsbehälters (9) befinden.

3. Bodenbearbeitungsgerät nach Anspruch 1 oder 2, dadurch gekennzeichnet, daß jede Düngerschar (14) an zwei Dosiervorrichtungen (16) angeschlossen ist.

4. Bodenbearbeitungsgerät nach einem der Ansprüche 1 bis 3, dadurch gekennzeichnet, daß jede schwenkbare Düngerschar (14; 14*) mit einem Injektor (21) verbunden ist, der über zwei Dosiervorrichtungen (16) speisbar ist.

5. Bodenbearbeitungsgerät nach einem der Ansprüche 1 bis 4, dadurch gekennzeichnet, daß die bewegbaren Düngerschare (14) einer Geräteseite auf einem gemeinsamen schwenkbaren Ausleger (18) angebracht sind.

6. Bodenbearbeitungsgerät nach einem der Ansprüche 1 bis 4, dadurch gekennzeichnet, daß die mittleren Düngerschare (14) vorzugsweise zusammen mit den zugeordneten Arbeitsaggregaten an einem quer zur Arbeitsrichtung angeordneten Rahmen (32) sitzen, in dem auf jeder Seite zumindest ein Teleskoprohr (30) gelagert ist, das zumindest ein weiteres Düngerschar (14") vorzugsweise zusammen mit einem Arbeitsaggregat trägt.

7. Bodenbearbeitungsgerät nach einem der Ansprüche 1 bis 6 in der Ausbildung als pneumatische Einzelkorn-Sämaschine, deren Arbeitsaggregate von Ablagevorrichtungen für Saatgut gebildet sind, denen letzteres über Druckluft- bzw. Saugluft beaufschlagte Vereinzelungseinrichtungen zugeführt wird, dadurch gekennzeichnet, daß Ablagevorrichtungen (5) und schwenkbare Düngerschare (14) an ein gemeinsames Gebläse angeschlossen sind.

8. Bodenbearbeitungsgerät nach einem der Ansprüche 1 bis 7, dadurch gekennzeichnet, daß das Gerät von einem landwirtschaftlichen Nutzfahrzeug angetrieben ist und sich der Düngerbehälter (6) über die gesamte Fahrzeugbreite erstreckt.

Fig.1

Fig 2

EP 0 349 958 A2

FIG.3

FIG. 4